# EUROPÄISCHE PATENTSCHRIFT

(11) **EP 1 285 006 B1**
(45) Veröffentlichungstag und Bekanntmachung des Hinweises auf die Patenterteilung: **20.10.2004**
(21) Anmeldenummer: 01936185.6
(22) Anmeldetag: 04.04.2001
(51) Int. Cl.: C08F 4/70, C08F 10/00

(54) **VERFAHREN ZUR HERSTELLUNG EINES KATALYSATORSYSTEMS FÜR DIE POLYMERISATION VON OLEFINEN**
METHOD FOR THE PRODUCTION OF A CATALYST SYSTEM FOR THE POLYMERISATION OF OLEFINS
PROCEDE DE PRODUCTION D'UN SYSTEME CATALYSEUR POUR LA POLYMERISATION DES OLEFINES

(30) Priorität: 08.04.2000 DE 10017660
(43) Veröffentlichungstag der Anmeldung: 26.02.2003
(73) Patentinhaber: BASF AKTIENGESELLSCHAFT, 67056 Ludwigshafen (DE)
(72) Erfinder: KRISTEN, Marc, Oliver, 67117 Limburgerhof (DE); HAUCK, Gerhard, 67459 Böhl-Iggelheim (DE)
(74) Vertreter: Seelert, Stefan, Dr.
(86) Internationale Anmeldenummer: PCT/EP2001/003829
(87) Internationale Veröffentlichungsnummer: WO 2001/077187

(56) Entgegenhaltungen:
- WO-A-99/12981

## Beschreibung

Verfahren zur Herstellung eines Katalysatorsystems zur Polymerisation von Olefinen, dadurch gekennzeichnet, dass man zunächst eine oder mehrere Verbindungen der allgemeinen Formeln Ia oder Ib 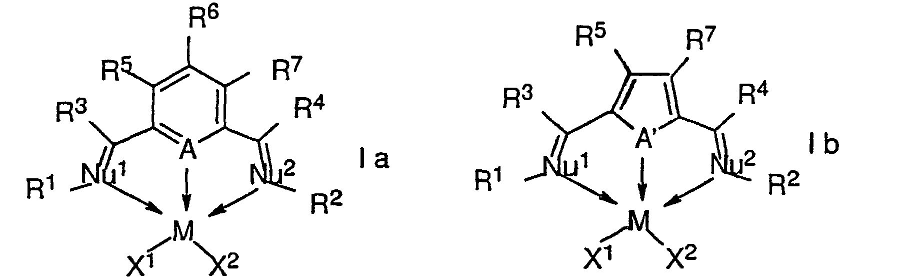 in denen die Variablen wie folgt definiert sind:
- M: ist ein Übergangsmetall der Gruppen 5 bis 10 des Periodensystems der Elemente,
- A: ist ausgewählt aus N, P oder As,
- A': ist ausgewählt aus O oder S,
- Nu¹, Nu²: N oder P,
- X¹, X²: Halogen oder C₁-C₄-Alkoxy;
- R¹, R²: unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
- R³, R⁴: Wasserstoff, unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
- R⁵ bis R⁷: sind unabhängig voneinander ausgewählt aus Wasserstoff, unsubstituiertem oder substituiertem C₁-C₁₂-Alkyl, C₃-C₁₂-Cycloalkyl, C₇-C₁₅-Aralkyl, C₆-C₁₄-Aryl oder fünf- oder sechsgliedrigem N-haltige Heteroaryl, Halogen, C₁-C₆-Alkoxy, NO₂, SiR⁸R⁹R¹⁰ oder OSiR⁸R⁹R¹⁰, wobei benachbarte Reste miteinander unter Einbeziehung des Stammkörpers zu einem 5- bis 10-gliedrigen Ring verbunden sein können,
- R⁸ bis R¹⁰: sind unabhängig voneinander ausgewählt aus Wasserstoff oder unsubstituiertem oder substituiertem C₁-C₁₂-Alkyl, C₃-C₁₂-Cycloalkyl, C₇-C₁₅-Aralkyl, C₆-C₁₄-Aryl; vorlegt, dann einen molekular definierten Aktivator der allgemeinen Formeln II a bis b zugibt

[(L-H)]⁺[(M')Q¹Q²Q³Q⁴]⁻ II a

[CAr₃)]⁺(M')Q¹Q²Q³Q⁴]⁻ II b

wobei die Reste die folgende Bedeutung haben:
- [L-H]⁺: eine Brønsted-Säure, wobei L eine elektroneutrale Lewis-Base ist,
- M': ein Element der Gruppe 13 des Periodensystems der Elemente,
- Q¹ bis Q⁴: sind unabhängig voneinander ausgewählt aus Hydrid, unsubstituiertem oder substituiertem C₁-C₁₂-Alkyl, C₃-C₁₂-Cycloalkyl, C₇-C₁₅-Aralkyl, C₆-C₁₄-Aryl oder Halogenid mit der Maßgabe, dass höchstens zwei Reste Q¹ und Q² Halogenid sind;
- Ar: sind gleich oder verschieden und ausgewählt aus unsubstituiertem oder substituiertem C₆-C₁₄-Aryl,
und schließlich ein Alkylierungsmittel, ausgewählt aus LiR¹¹, MgR¹¹R¹² oder AlR¹²R¹³R¹⁴, hinzufügt, wobei
- R¹¹ bis R¹⁴: sind unabhängig voneinander ausgewählt aus unsubstituiertem oder substituiertem C₁-C₁₂-Alkyl, C₃-C₁₂-Cycloalkyl, C₇-C₁₅-Aralkyl oder C₆-C₁₄-Aryl.

Die vorliegende Erfindung betrifft ein Verfahren zur Herstellung eines Katalysatorsystems zur Polymerisation von Olefinen. Weiterhin betrifft die vorliegende Erfindung das Katalysatorsystem, hergestellt nach dem erfindungsgemäßen Verfahren, sowie ein Verfahren zur Polymerisation und Copolymerisation von Olefinen unter Verwendung des erfindungsgemäßen Katalysatorsystems.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren dabei von wachsender Bedeutung, wobei als Zentralatome neben Zr wie beispielsweise in Metallocenkatalysatoren (H.-H. Brintzinger *et al.*, *Angew. Chem.* **1995**, *107*, 1255) auch Ni oder Pd (WO 96/23010) oder Fe und Co (z.B. WO 98/27124) in jüngster Zeit genauer untersucht worden sind. Die Komplexe von Ni, Pd, Fe und Co werden auch als Komplexe später Übergangsmetalle bezeichnet.

Metallocenkatalysatoren haben für den großtechnischen Einsatz Nachteile. Die Katalysatoren sind gegenüber Verunreinigungen in den großtechnisch erhältlichen Monomeren, im Prozessgas und den eingesetzten Lösemitteln sehr empfindlich. Als störende Verunreinigungen sind beispielsweise Feuchtigkeit und Sauerstoff sowie CO zu nennen. Des weiteren ist der Preis für Zr als Zentralmetall der technisch wichtigen Zirkonocene sehr hoch.

Während Ni- oder Pd-Komplexe (WO 96/23010) die Bildung hochverzweigter, kommerziell weniger interessanter Polymere katalysieren, führt die Verwendung von-Fe- oder Co-Komplexen zur Bildung von hochlinearem Polyethylen. In G.J.P. Britovsek *et al.*, *J. Am. Chem. Soc.* 1999, *121*, 8728 und V.C. Gibson *et al.*, *J. Chem. Soc.*, *Chem. Commun.* 1998, 849 sowie in M. Brookhart et al., *J*. Am. *Chem. Soc.* 1998, *120*, 4049 sind polymerisationsaktive Komplexe von Fe und Co mit Pyridyl-2,6-diiminliganden offenbart, die am Imin-Stickstoff mit Arylgruppen substituiert sind. Als Cokatalysatoren für die Ethylenpolymerisation werden Methylaluminoxan ("MAO") oder modifiziertes Methylaluminoxam ("MMAO") eingesetzt, bei dem ein gewisser Prozentsatz der Methylgruppen durch Isobutylgruppen ersetzt wurde.

Die Verwendung von MAO oder anderen Aluminoxanen hat jedoch auch Nachteile:
- MAO und andere Aluminoxane müssen in einem großen molaren Überschuss eingesetzt werden, üblich sind 100 bis 1000-fache Überschüsse. Dadurch wird der Cokatalysator zu einem signifikanten Kostenfaktor für die Katalysatoren.
- Die mit Aluminoxanen aktivierten Katalysatoren werden üblicherweise polymerisationsaktiv in das laufende Verfahren, beispielsweise Gasphasen-, Lösungs-, Suspensions- oder Massepolymerisationsverfahren, dosiert und kann zu Verstopfungen, insbesondere in den Dosierleitungen führen.
- Aluminoxane sind molekular nicht definierte Substanzen, deren Fähigkeit zur Aktivierung von Übergangsmetallkomplexen stark von dem Herstellverfahren und Verunreinigungen abhängt. Weiterhin spielt die Lagertemperatur und die Lagerdauer eine Rolle. Die Qualitätskontrolle ist schwierig.
- Aluminoxane müssen stets gekühlt gelagert werden, weil sie ansonsten zum Vergelen neigen. Aluminoxan-Gele sind als Cokatalysatoren ungeeignet.
- Aluminoxane-werden als Lösungen in den Handel gebracht, deshalb muss viel ansonsten wertloses Lösemittel transportiert werden.
- Aluminoxane, insbesondere solche mit C₁-C₄-Alkylresten, sowie ihre Lösungen sind pyrophor und erfordern erhöhten Sicherheitsaufwand.

Für Metallocene haben sich molekular definierte Aktivatoren bewährt, die die obigen Nachteile nicht aufweisen. Sie werden beispielsweise in EP-A 0 277 004, EP-A 0 468 537 und EP-A 0 561 479 offengelegt; weitere Beispiele finden sich in EP-A 0 426 638. Es handelt sich in diesen Beispielen um Salze mit großen, nicht oder nur schwach koordinierenden Anionen wie beispielsweise dem Tetrakispentafluorphenylborat-Anion, oder starken Lewis-Säuren wie beispielsweise B(C₆F₅)₃ (X. Yang et *al.*, *J*. *Am. Chem. Soc. **1991**, 113,* 3623). Diese Salze werden mit dem Dialkylderivat eines Metallocens umgesetzt. Die Abspaltung eines Alkylanions aus der Metallocen-Verbindung wird durch das Gegenion bewerkstelligt, das entweder eine Brønsted-Säure oder eine Lewis-Säure ist. Wichtig ist jedoch, dass die üblicherweise eingesetzten Metallocendialkylverbindungen kommerziell erhältlich oder aber aus dem Metallocendichlorid leicht zu gewinnen sind. Dies ist bei den entsprechenden Komplexen später Übergangsmetalle häufig nicht der Fall.

WO 98/27124 und WO 98/30612 betreffen die Polymerisation von Ethylen und Propylen, wobei zunächst ein Fe- oder Co-Komplex eines dreizähnigen Pyridyldiiminliganden mit Ethylen oder Propylen oder einem anderen Monomer kontaktiert wird; anschließend werden MAO oder ein Aktivator mit definierter Struktur zugegeben und schließlich ein Aluminiumalkyl. Die Vorgehensweise ist so, dass ein Komplex eines späten Übergangsmetalls, in diesem Fall ein Fe- oder Co-Komplex in Anwesenheit von Ethylen zunächst mit Aluminiumtrialkyl versetzt wird und anschließend mit einer starken Lewis-Säure wie beispielsweise B(C₆F₅)₃. Nachteilig ist die geringe Aktivität der offenbarten Systeme mit 8 bzw. 13 kg Polyethylen/(mol Co)·h. Derart wenig aktive Katalysatorsysteme sind für technische Prozesse ungeeignet.

WO 99/12981 betrifft Katalysatorsysteme mit dreizähnigen Pyridyldiiminliganden als Katalysatoren für die Polymerisation von 1-Olefinen. Beispiel 29 zeigt die Polymerisation mit einem molekular definierten Aktivator, speziell einem Tetrakispentafluorphenylborat, und (Trimethylsilylmethyl)-magnesiumchlorid als Alkylierungsmittel. Das Trimethylsilylmethyl-Anion ist sterisch sehr anspruchsvoll und muss gewählt werden, weil dadurch eine reduktive Eliminierung der Alkylgruppen am späten Übergangsmetall verhindert werden kann. Die Vorgehensweise, die auch in einem Vortrag von V.C. Gibson auf der Tagung "The VIII^{th} International Conference on Organometallic Chemistry" vom 16.-21.08.1998 in München vorgestellt wurde, ist technisch nicht sinnvoll, weil die zur Alkylierung erforderlichen speziellen Reagenzien wie beispielsweise (Trimethylsilylmethyl)-magnesiumchlorid, Trimethylsilylmethyl-Lithium oder Aluminium-tris-trimethylsilylmethyl sehr teuer sind.

Es bestand also die Aufgabe,
- ein Verfahren bereitzustellen, nach dem Komplexe Später Übergangsmetalle für die Polymerisation von Olefinen mit einem molekular definierten Aktivator aktiviert werden können, wobei kommerziell in großen Mengen erhältliche und somit kostengünstige Metallalkylverbindungen verwendet werden können.

Es wurde nun gefunden, dass die Aufgabe dadurch gelöst werden kann, dass bei der Umsetzung der Reaktionspartner eine spezielle Reihenfolge eingehalten wird. Das erfindungsgemäße Verfahren lässt sich wie folgt beschreiben:

Man legt eine oder mehrere Verbindungen der allgemeinen Formeln I a oder I b vor, 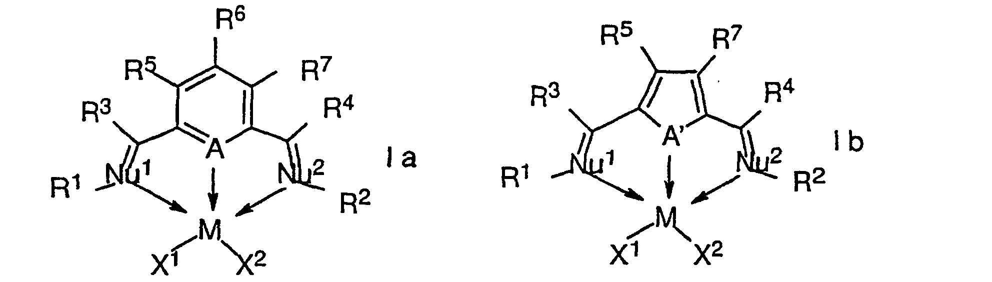 in denen die Variablen wie folgt definiert sind:
- M: ist ein Übergangsmetall der Gruppen 5 bis 10 des Periodensystems der Elemente,
- A: ist ausgewählt aus N, P oder As,
- A': ist ausgewählt aus O oder S,
- Nu¹, Nu²: N oder P,
- X¹, X²: Halogen oder C₁-C₄-Alkoxy;
- R¹, R²: unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
- R³, R⁴: Wasserstoff, unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
- R⁵ bis R⁷: sind unabhängig voneinander ausgewählt aus Wasserstoff, unsubstituiertem oder substituiertem C₁-C₁₂-Alkyl, C₃-C₁₂-Cycloalkyl, C₇-C₁₅-Aralkyl, C₆-C₁₄-Aryl oder fünf- oder sechsgliedrigem N-haltig Heteroaryl, Halogen, C₁-C₆-Alkoxy, NO₂, SiR⁸R⁹R¹⁰ ode OSiR⁸R⁹R¹⁰, wobei benachbarte Reste miteinander unter Einbeziehung des Stammkörpers zu einem 5- bis 10-gliedrigen Ring verbunden sein können.

Bevorzugt sind die Variablen in den allgemeinen Formeln I a und b wie folgt definiert:
- M: V, Cr, Fe, Ru oder Co, besonders bevorzugt Fe;
- A: N,
- A': S,
- Nu¹, Nu²: N,
- X¹, X²: Halogen wie beispielsweise Fluor, Chlor, Brom oder Iod, besonders bevorzugt X¹ und X² gleich Chlor, oder
- C₁-C₄-Alkoxy wie beispielsweise Methoxy, Ethoxy, n-Propoxy, iso-Propoxy, n-Butoxy, iso-Butoxy, sec.-Butoxy und tert.-Butoxy; besonders bevorzugt Methoxy, Ethoxy, n-Propoxy und n-Butoxy;
- R¹, R²: - C₁-C₁₂-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Decyl oder n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₂-Alkylgruppen seien beispielhaft genannt: ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 2-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₅-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₂-C₁₂-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- ganz besonders bevorzugt sind 2,6-Dimethylphenyl, 2,6-Diisopropylphenyl, Mesityl und 2,6-Dichlorphenyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, *N*-Indolyl und *N*-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, *N*-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethyl silyloxygruppe und die tert.-Butyldimethylsilyloxygruppe;
   - ganz besonders bevorzugt sind 2,5-Methyl-*N*-pyrrolyl, 2,5-Diisopropyl-*N*-pyrrolyl und *N*-Carbazolyl.
- R³, R⁴: Wasserstoff,
- C₁-C₁₂-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Decyl oder n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₂-Alkylgruppen seien beispielhaft genannt: ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenylbutyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₅-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₁₂-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-*para*-xylylsilyloxygruppe; besonders bevorzugt sind die Trimethylsilyloxygruppe und die tert.-Butyldimethylsilyloxygruppe;
- ganz besonders bevorzugt sind 2,6-Dimethylphenyl, 2,6-Diisopropylphenyl, Mesityl und 2,6-Dichlorphenyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, *N*-Indolyl und *N*-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, *N*-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 2,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   ganz besonders bevorzugt sind 2,5-Methyl-*N*-pyrrolyl, 2,5-Diisopropyl-*N*-pyrrolyl und *N*-Carbazolyl
- R⁵ bis R⁷: sind unabhängig voneinander ausgewählt aus
- Wasserstoff,
- C₁-C₁₂-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Decyl oder n-Dodecyl; bevorzugt C₁-C₆-Alkyl wie Methyl, Ethyl, n-Propyl, iso-Propyl, n-Butyl, iso-Butyl; sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₂-Alkylgruppen seien beispielhaft genannt: ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclpentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₅-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₁₂-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-*para*-xylylsilyloxygruppe; besonders bevorzugt sind die Trimethylsilyloxygruppe und die tert.-Butyldimethylsilyloxygruppe;
- ganz besonders bevorzugt sind 2,6-Dimethylphenyl, 2,6-Diisopropylphenyl, Mesityl und 2,6-Dichlorphenyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und *N*-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl; iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, *iso*-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenylbutyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, meta-Kresyloxy, *para*-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   ganz besonders bevorzugt sind 2,5-Methyl-*N*-pyrrolyl, 2,5-Diisopropyl-*N*-pyrrolyl und *N*-Carbazolyl;
- Halogen, beispielsweise Fluor, Chlor, Brom oder Iod, bevorzugt sind Fluor und Chlor,
- C₁-C₆-Alkoxy, wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy,
- NO₂,
- Silylgruppen SiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tripara-xylylsilylgruppe; besonders bevorzugt sind die Trimethylsilylgruppe und die tert-Butyldimethylsilylgruppe;
- Silyloxygruppen OSiR⁸R⁹R¹⁰, wobei R⁸ bis R¹⁰ unabhängig voneinander aus Wasserstoff, C₁-C₈-Alkylgruppen, C₇-C₁₅-Aralkyl und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe.

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I a R⁵ und R⁶ oder in Formel I b R⁵ und R⁷ zusammen sein: -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CH(CH₃)-O-, -O-CH-(C₆H₅)-O-, -O-CH₂-CH₂-O-, -O-C(CH₃)₂-O-, -N CH₃-CH₂-CH₂-NCH₃-, -NCH₃-CH₂-NCH₃- oder -O-Si(CH₃)₂-O-.

Besonders bevorzugt sind aufgrund des Herstellverfahrens der Komplexe mit den allgemeinen Formeln I a und b solche, bei denen R¹ und R² sowie Nu¹ und Nu² jeweils gleich gewählt werden.

Ganz besonders bevorzugt werden die folgenden Komplexe der allgemeinen Formel I a:
[2,6-Diacetylpyridin-bis-(2,6-diiso-propylanil)]-FeCl₂
[2,6-Diacetylpyridin-bis-(2,6-diiso-propylanil)]-CoCl₂
[2,6-Diacetylpyridin-bis-(mesitylanil)]-FeCl₂
[2,6-Diacetylpyridin-bis-(mesitylanil)]-CoCl₂
[2,6-Diacetylpyridin-bis-(mesitylanil)-RuCl₂
[2,6-Diacetylpyridin-bis-(2-methyl-5-iso-propylpyrrol-1-ylimin)]-FeCl₂
[2,6-Diacetylpyridin-bis-(2-methyl-5-iso-propylpyrrol-1-ylimin)]-COCl₂
[2,6-Diacetylpyridin-bis-(2,5-diiso-propylpyrrol-1-ylimin)]-CoCl₂
[2,6-Diacetylpyridin-bis-(2,5-diiso-propylpyrrol-1-ylimin)]-FeCl₂
sowie die entsprechenden Dibromide.

Ganz besonders bevorzugte Beispiele für Komplexe der allgemeinen Formel I b sind:
[2,5-Diacetylfuran-bis-(2,6-diiso-propylanil)]-FeCl₂
[2,5-Diacetylfuran-bis-(2,6-diiso-propylanil)]-CoCl₂
[2,5-Diacetylfuran-bis-(mesitylanil)]-FeCl₂
[2,5-Diacetylfuran-bis- (mesitylanil)] -CoCl₂
[2,5-Diacetylfuran-bis- (mesitylanil) ]-RuCl₂
[2,5-Diacetylfuran-bis-(2-methyl-5-iso-propylpyrrol-1-ylimin)]-FeCl₂
[2,5-Diacetylfuran-bis-(2-methyl-5-iso-propylpyrrol-2-ylimin)]-CoCl₂
[2,5-Diacetylfuran-bis-(2,5-diiso-propylpyrrol-1-ylimin)]-CoCl₂
[2,5-Diacetylfuran-bis-(2,5-diiso-propylpyrrol-1-ylimin)]-FeCl₂
[2,5-Diacetylthiophen-bis-(2,6-diiso-propylanil)]-FeCl₂
[2,5-Diacetylthiophen-bis- (2,6-diiso-propylanil) ] -CoCl₂
[2,5-Diacetylthiophen-bis-(mesitylanil)]-PeCl₂
[2,5-Diacetylthiophen-bis-(mesitylanil)3-CoCl₂
[2,5-Diacetylthiophen-bis-(mesitylanil)]-RuCl₂
[2,5-Diacetylthiophen-bis-(2-methyl-5-iso-propylpyrrol-1-ylimin)]-FeCl₂
[2,5-Diacetylthiophen-bis-(2-methyl-5-iso-propylpyrrol-1-ylimin)] -CoCl₂
[2,5-Diacetylthiophen-bis- (2,5-diiso-propylpyrrol-1-ylimin)]-CoCl₂ [2,5-Diacetylthiophen-bis-(2,5-diiso-propylpyrrol-1-ylimin)]-FeCl₂
sowie die entsprechenden Dibromide.

Die Komplexe der allgemeinen Formeln I a und b lassen sich nach Literaturvorschriften, synthetisieren, wie beispielsweise in *J*. *Chem. Soc.*, Chem. *Commun.* 1998, 849 und *J. Am. Chem. Soc.* 1998 *120*, 4049 oder in PCTIEP 100 107 657 beschrieben.

Darauf folgend gibt man einen molekular definierten Aktivator der allgemeinen Formeln II a bis II b zu:

[(L-H)]⁺[(M') Q¹Q²Q³Q⁴]⁻ II a

[(CAr₃)]⁺[(M') Q¹Q²Q³Q⁴]⁻ II b

Dabei haben die Variablen die folgende Bedeutung:
- [L-H]⁺: ist eine Brønsted-Säure, wobei L eine elektroneutrale Lewis-Base ist, beispielsweise ein Amin der allgemeinen Formel NR⁸R⁹R¹⁰, ein Phosphan der allgemeinen Formel PR⁸R⁹R¹⁰ oder ein Ether der allgemeinen Formel OR¹R², wobei die Reste R¹ und R² sowie R⁸ bis R¹⁰ unabhängig voneinander aus der gleichen Gruppe wie oben definiert gewählt werden. Bevorzugte Lewis-Basen L sind tertiare Amine oder Phosphane, besonders bevorzugte Lewis-Basen L sind Tri-n-butylamin, *N*,*N*-Dimethylanilin und *N*,*N*-Dimethylbenzylamin.
- M': ist ein Element der Gruppe 13 des Periodensystems der Elemente, bevorzugt sind B und Al.
- Q¹ bis Q⁴: ist unabhängig voneinander ausgewählt aus
- Hydrid,
- C₁-C₁₂-Alkyl, beispielsweise Methyl, Ethyl, n-Propyl, iso-propyl, n-Butyl, iso-Butyl,- sec.-Butyl, tert.-Butyl, n-Pentyl, iso-Pentyl, sec.-pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Decyl oder n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₂-Alkylgruppen seien beispielhaft genannt: ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₅-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 2-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, bevorzugt Fluor oder Chlor und besonders bevorzugt Fluor.
- Halogenid mit der Maßgabe, dass höchstens zwei Reste Q¹ und Q² Halogenid sein können;

Ganz besonders bevorzugt sind alle Reste Q¹ bis Q⁴ gleich und ausgewählt aus Pentafluorphenyl, 3,5-bis-Perfluormethylphenyl oder ortho-Perfluorbiphenyl.
- Ar: ist gleich oder verschieden und ausgewählt aus unsubstituiertem oder substituiertem C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₅-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- Halogen, beispielsweise Fluor, Chlor, Brom oder Iod, bevorzugt Fluor oder Chlor und besonders bevorzugt Fluor, oder
- NO₂.
Bevorzugt ist Ar Phenyl.

Als dritten Reaktionspartner gibt man ein Alkylierungsmittel, ausgewählt aus LiR¹¹, MgR¹¹R¹² oder AlR¹²R¹³R¹⁴, hinzu, wobei die Reste die folgende Bedeutung haben:
- R¹¹ bis R¹⁴: sind unabhängig voneinander ausgewählt aus C₁-C₁₂-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Decyl oder n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Besonders bevorzugte Alkylierungsmittel sind n-Butyllithium, Trimethylaluminium, Triethylaluminium, Triisobutylaluminium, Tri-n-hexylaluminium und Butyloctylmagnesium ("BOMag").

Es ist auch möglich, Gemische verschiedener Alkylierungsmittel zugeben.

Während die Reihenfolge der Zugabe der Reagenzien von entscheidender Bedeutung ist, können Druck- und Temperaturbedingungen in weiten Grenzen variiert werden. Bevorzugt ist das Arbeiten bei Normaldruck. Als Temperaturen seien -20°C bis + 120°C als geeignet genannt, bevorzugt sind 0 bis 100°C und besonders bevorzugt sind 20 bis 80°C. Die Einstellung eines Temperaturprofils hat sich besonders bewährt; so wird die Umsetzung des Komplexes des späten Übergangsmetalls mit dem molekular definierten Aktivator bevorzugt bei 60 bis 100° durchgeführt, insbesondere dann, wenn es sich bei dem Aktivator um ein Salz handelt. Die anschließende Reaktion mit dem Alkylierungsmittel wird bevorzugt bei Zimmertemperatur durchgeführt.

Die Reaktion wird üblicherweise in einem Lösemittel durchgeführt. Als Lösemittel haben sich unter den Reaktionsbedingungen inerte Lösemittel wie Toluol, ortho-Xylol, meta-Xylol, para-Xylol, Ethylbenzol oder Mischungen derselben als geeignet erwiesen. Außerdem sind Alkane wie beispielsweise n-Heptan oder Isododekan als Lösemittel geeignet, weiterhin Mischungen von Alkanen mit Toluol, ortho-Xylol, meta-Xylol, para-Xylol oder Ethylbenzol.

Die Molverhältnisse von Komplex I a oder I b zu Aktivator II a bis b können in gewissen Grenzen variiert werden. So können Molverhältnisse I a (oder I b) zu II a bzw. II b von 10:1 bis 1:10 gewählt werden, bevorzugt betragen die Verhältnisse 2:1 bis 1:2 und besonders bevorzugt 1:1. Das Alkylierungsmittel setzt man vorzugsweise in einem molaren Überschuss, bezogen auf I a bzw. I b, ein; bevorzugt ist 2:1 bis 1000:1 und besonders bevorzugt 5:1 bis 350:1.

Die Reaktion ist im Allgemeinen nach kurzer Zeit beendet. Geeignete Reaktionszeiten sind 5 Minuten bis 2 Stunden, wobei 15 bis 45 Minuten bevorzugt sind.

Das Verfahren gelingt nur bei sorgfältigem Ausschluss von Luft und Feuchtigkeit, was beispielsweise durch Arbeiten nach der Schlenk-Technik gewährleistet werden kann.

Ein weiterer Gegenstand der vorliegenden Erfindung ist ein Katalysatorsystem, hergestellt nach dem erfindungsgemäßen Verfahren.

Das nach dem erfindungsgemäßen Verfahren hergestellte Katalysatorsystem ist geeignet zur Polymerisation und Copolymerisation von Olefinen.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75.bar oder Hochdruckbedingungen von 500 bis 2500 bar. Als Temperatur hat sich ein Bereich von 0 bis 250°C als geeignet erwiesen, bevorzugt sind 40 bis 200°C und besonders bevorzugt 50 bis 185°C.

Als Monomer sind die folgenden Olefine geeignet: Ethylen, Propylen, 1-Buten, 1-Penten, 1-Hexen, 1-Octen, 1-Decen oder 1-Undecen, wobei Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, weiterhin Cycloolefine wie beispielsweise Cyclopenten, Norbornen oder Norbornadien sowie substituierte Norbornene.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Die Polymerisation wird in der Regel in Gegenwart von einer Metallalkylverbindung durchgeführt, die auch als Putzalkyl bezeichnet wird. Als Putzalkyl sind die gleichen Verbindungen besonders geeignet, die zur Herstellung des erfindungsgemäßen Katalysatorsystems verwendet wurden.

Wenn sich der Einsatz von Aluminiumalkyl oder Lithiumalkyl als Putzalkyl erforderlich erweist, so ist es von Vorteil, das Aluminiumalkyl, Magnesiumalkyl oder Lithiumalkyl als Lösung in einem Kohlenwasserstoff getrennt vom Katalysatorsystem zu dosieren. Es ist jedoch auch möglich, das Putzalkyl zusammen mit dem erfindungsgemäßen Katalysatorsystem zu dosieren.

Das erfindungsgemäße Katalysatorsystem hat sich weiterhin als Wasserstoff-regelbar erwiesen, d.h. durch Zugabe von Wasserstoff lässt sich das Molekulargewicht der durch das erfindungsgemäße Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Ein Verfahren zur Polymerisation von Olefinen mit dem erfindungsgemäßen Katalysatorsystem in Gegenwart von Wasserstoff als Regler ist ebenfalls Gegenstand der vorliegenden Erfindung.

### Arbeitsbeispiel:

Wenn nicht besonders vermerkt, wurden alle Arbeiten unter Ausschluß von Luft und Feuchtigkeit unter Verwendung von Standard-Schlenk-Techniken durchgeführt. Geräte und Chemikalien waren entsprechend vorbereitet. Die verwendeten Fe-Komplexe können z.B. wie in *J. Chem. Soc.*, *Chem. Commun.* 1998, 849 und *J. Am. Chem. Soc.* 1998, *120*, 4049 oder in DE 199 39 415.6 beschrieben hergestellt werden. Das Borat [PhNH(CH₃)₂] [B(C₆H₅)₄] ist kommerziell erhältlich, beispielsweise bei Fa. Albemarle.
Die Polymerviskosität wurde nach ISO 1628-3 bestimmt.

### Polymerisation:

Unter Rühren wurde ein Gemisch aus 7 mg (0,013 mmol) [2,6-Diacetylpyridin-bis-(2-methyl-5-iso-propylpyrrol-1-ylimin)]-PeCl₂ und 12 mg (0,015 mmol) *N*,*N*-Dimethylanilinium-tetrakis-pentafluorphenylborat in 50 ml Toluol auf 80°C erwärmt und dann 30 min bei 80°C gerührt. Anschließend wurde auf Raumtemperatur abgekühlt. Von der erhaltenen Lösung wurden 12 ml (= 1,68 mg Fe-Komplex) in einen 1-1-Stahlautoklaven überführt, in den 400 ml Toluol und 250 mg Aluminiumtriethyl (als 2 M Lösung in Heptan) vorgelegt wurden. Dann wurde eine Temperatur von 70°C eingestellt und Ethylen bis zu einem Druck von 40 bar aufgepresst. Nach 60 min wurde die Polymerisation durch Entspannen des Autoklaven abgebrochen. Man erhielt 57 g Polyethylen als weißes Pulver (Viskosität: 2,32 dl/g); der Autoklav war belagfrei.

### Vergleichsversuch:

Unter Rühren wurden zu 50 ml Toluol in dieser Reihenfolge zugegeben: 7 mg (0,013 mmol) [2,6-Diacetylpyridin-bis-(2-methyl-5-iso-propylpyrrol-1-ylimin)]-FeCl₂, 250 mg Triethylaluminium (als 2 M Lösung in Heptan) und 12 mg (0,015 mmol) *N*,*N*-Dimethylanilinium-tetrakis-pentafluorphenylborat. Dieses Gemisch wurde auf 80 °C erwärmt und dann 30 min bei 80°C gerührt. Anschließend wurde auf Raumtemperatur abgekühlt. Von der erhaltenen Lösung wurden 12 ml (= 1,68 mg Fe-Komplex) in einen 1-L- Stahlautoklaven überführt, in den 400 ml Toluol und 125 mg Aluminiumtriethyl (als 2 M Lösung in Heptan) vorgelegt wurden. Dann wurde eine Temperatur von 70°C eingestellt und Ethylen bis zu einem Druck von 40 bar aufgepresst. Es war keine Aufnahme von Ethylen festzustellen. Nach 90 min konnte kein Polymer im Autoklaven gefunden werden.

## Patentansprüche

1. Verfahren zur Herstellung eines Katalysatorsystems zur Polymerisation von Olefinen, **dadurch gekennzeichnet, dass** man zunächst eine oder mehrere Verbindungen der allgemeinen Formeln I a oder I b, 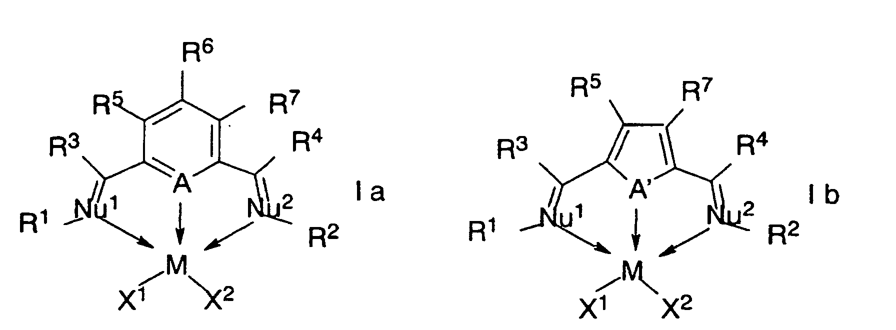 in denen die Variablen wie folgt definiert sind:
M ist ein Übergangsmetall der Gruppen 5 bis 10 des Periodensystems der Elemente,
A ist ausgewählt aus N, P oder As,
A' ist ausgewählt aus O oder S,
Nu¹, Nu² N oder P,
X¹, X² Halogen oder C₁-C₄-Alkoxy;
R¹, R² unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
R³, R⁴ Wasserstoff, unsubstituiertes oder substituiertes C₁-C₁₂-Alkyl, C₃-C₁₂-Cycloalkyl, C₇-C₁₅-Aralkyl, C₆-C₁₄-Aryl oder fünf- oder sechsgliedriges N-haltiges Heteroaryl,
R⁵ bis R⁷ sind unabhängig voneinander ausgewählt aus Wasserstoff, unsubstituiertem oder substituiertem C₁-C₁₂-Alkyl, C₃-C₁₂-Cycloalkyl, C₇-C₁₅-Aralkyl, C₆-C₁₄-Aryl oder fünf- oder sechsgliedrigem N-haltige Heteroaryl, Halogen, C₁-C₆-Alkoxy, NO₂, SiR⁹R⁹R¹⁰ oder OSiR⁸R⁹R¹⁰, wobei benachbarte Reste miteinander unter Einbeziehung des Stammkörpers zu einem 5- bis 10-gliedrigen Ring verbunden sein können,
R⁸ bis R¹⁰ sind unabhängig voneinander sind unabhängig voneinander ausgewählt aus Wasserstoff oder unsubstituiertem oder substituiertem C₁-C₁₂-Alkyl, C₃-C₁₂-Cycloalkyl, C₇-C₁₅-Aralkyl, C₆-C₁₄-Aryl;
vorlegt, dann einen molekular definierten Aktivator der allgemeinen Formeln II a bis b zugibt
[(L-H)]⁺[(M')Q¹Q²Q³Q⁴]⁻ II a
[CAr₃)]⁺(M')Q¹Q²Q³Q⁴]⁻ II b
wobei die Reste die folgende Bedeutung haben:
[L-H]⁺ eine Brønsted-Säure, wobei L eine elektroneutrale Lewis-Base ist,
M' ein Element der Gruppe 13 des Periodensystems der Elemente,
Q¹ bis Q⁴ sind unabhängig voneinander ausgewählt aus Hydrid, unsubstituiertem oder substituiertem C₁-C₁₂-Alkyl, C₃-C₁₂-Cycloalkyl, C₇-C₁₅-Aralkyl, C₆-C₁₄-Aryl oder Halogenid mit der Maßgabe, dass höchstens zwei Reste Q¹ und Q² Halogenid sind;
Ar sind gleich oder verschieden und ausgewählt aus unsubstituiertem oder substituiertem C₆-C₁₄-Aryl, und schließlich ein Alkylierungsmittel, ausgewählt aus LiR¹¹, MgR¹¹R¹² oder AlR¹²R¹³R¹⁴, hinzufügt, wobei
R¹¹ bis R¹⁴ sind unabhängig voneinander ausgewählt aus unsubstituiertem oder substituiertem C₁-C₁₂-Alkyl, C₃-C₁₂-Cycloalkyl, C₇-C₁₅-Aralkyl oder C₆-C₁₄-Aryl.

2. Verfahren gemäß Anspruch 1, **dadurch gekennzeichnet, dass** M in den allgemeinen Formeln I a und I b Fe ist.

3. Verfahren gemäß den Ansprüchen 1 und 2, **dadurch gekennzeichnet, dass** A, Nu¹ und Nu² in der allgemeinen Formel I a N ist.

4. Verfahren gemäß den Ansprüchen 1 und 2, **dadurch gekennzeichnet, dass** Nu¹ und Nu² in der allgemeinen Formel I b jeweils N und A' S ist.

5. Verfahren gemäß den Ansprüchen 1 bis 4, **dadurch gekennzeichnet, dass** M' in den Formeln II a bis II b B oder A1 bedeutet.

6. Verfahren gemäß den Ansprüchen 1 bis 5, **dadurch gekennzeichnet, dass** L ein tertiäres Amin ist.

7. Verfahren gemäß den Ansprüchen 1 bis 6, **dadurch gekennzeichnet, dass** L ausgewählt ist aus Tri-*n*-butylamin, *N,N*-Dimethylanilin oder *N*,*N*-Dimethylbenzylamin.

8. Verfahren gemäß den Ansprüchen 1 bis 7, **dadurch gekennzeichnet, dass** alle Reste Ar Phenyl sind.

9. Verfahren gemäß den Ansprüchen 1 bis 8, **dadurch gekennzeichnet, dass** man einen molekular definierten Aktivator der allgemeinen Formeln II a bis b verwendet, in dem Q¹ bis Q⁴ gleich sind und ausgewählt. werden aus Pentafluorphenyl oder 3,5-bis-(Trifluormethyl)phenyl oder ortho-Perfluorbiphenyl.

10. Verfahren gemäß den Ansprüchen 1 bis 9, **dadurch gekennzeichnet, dass** es sich bei dem Alkylierungsmittel um Aluminiumalkyle handelt, ausgewählt aus Trimethylaluminium, Triethylaluminium, Tri-*n*-propylaluminium, Triisopropylaluminium, Trin-butylaluminium, Triisobutylaluminium und Tri-n-hexylaluminium.

11. Katalysatorsystem, erhältlich nach dem Verfahren gemäß den Ansprüchen 1 bis 10.

12. Verfahren zur Polymerisation oder Copolymerisation von Olefinen unter Verwendung eines Katalysatorsystems nach Anspruch 11.

13. Verfahren nach Anspruch 12, **dadurch gekennzeichnet, dass** man in Gegenwart von Wasserstoff als Molmassenregler polymerisiert.

## Claims

1. A process for preparing a catalyst system for the polymerization of olefins, which comprises initially charging one or more compounds of the formula I a or I b, 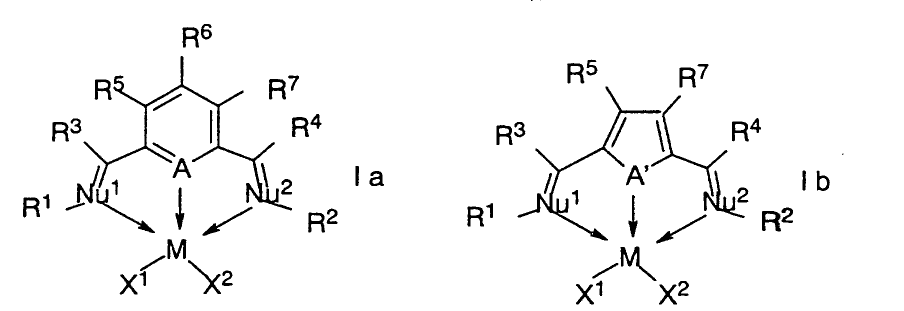 where the variables are defined as follows:
M is a transition metal of groups 5 to 10 of the Periodic Table of the Elements,
A is selected from among N, P and As,
A' is selected from among O and S,
Nu¹, Nu² are N or P,
X¹, X² are halogen or C₁-C₄-alkoxy;
R¹, R² are unsubstituted or substituted C₁-C₁₂-alkyl, C₃-C₁₂-cycloalkyl, C₇-C₁₅-aralkyl, C₆-C₁₄-aryl or five- or six-membered N-containing heteroaryl,
R³, R⁴ are hydrogen, unsubstituted or substituted C₁-C₁₂-alkyl, C₃-C₁₂-cycloalkyl, C₇-C₁₅-aralkyl, C₆-C₁₄-aryl or five- or six-membered N-containing heteroaryl,
R⁵ to R⁷ are each selected independently from among hydrogen, unsubstituted or substituted C₁-C₁₂-alkyl, C₃-C₁₂-cycloalkyl, C₇-C₁₅-aralkyl, C₆-C₁₄-aryl and five- and six-membered N-containing heteroaryl, halogen, C₁-C₆-alkoxy, NO₂, SiR⁸R⁹R¹⁰ and OSiR⁸R⁹R¹⁰, where adjacent radicals together with the parent heteroaryl may form a 5-to 10-membered ring,
R⁸ to R¹⁰ are selected independently from among hydrogen and substituted or unsubstituted C₁-C₁₂-alkyl, C₃-C₁₂-cyCloalkyl, C₇-C₁₅-aralkyl and C₆-C₁₄-aryl;
then adding a molecularly defined activator of the form II a to b
[(L-H)]⁺[(M')Q¹Q²Q³Q⁴]⁻ II a
[(CAr₃)]⁺[(M')Q¹Q²Q³Q⁴]⁻ II b
where the radicals have the following meanings:
[L-H]⁺ is a Bronsted acid, where L is an electron-neutral Lewis base,
M' is an element of group 13 of the Periodic Table of the Elements,
Q¹ to Q⁴ are selected independently from among hydride, unsubstituted or substituted C₁-C₁₂-alkyl, C₃-C₁₂-cycloalkyl, C₇-C₁₅-aralkyl, C₆-C₁₄-aryl and halide, with the proviso that not more than two radicals Q¹ and Q² are halide;
Ar are identical or different and are selected from among unsubstituted or substituted C₆-C₁₄-aryl, and finally adding an alkylating agent selected from among LiR¹¹, MgR¹¹R¹² and AlR¹²R¹³R¹⁴, where
R¹¹ to R¹⁴ are selected independently from among unsubstituted or substituted C₁-C₁₂-alkyl, C₃-C₁₂-cycloalkyl, C₇-C₁₅-aralkyl and C₆-C₁₄-aryl.

2. A process as claimed in claim 1, wherein M in the formulae I a and I b is Fe.

3. A process as claimed in claim 1 or 2, wherein A, Nu¹ and Nu² in the formula I a are each N.

4. A process as claimed in claim 1 or 2, wherein Nu¹ and Nu² in the formula I b are each N and A' is S.

5. A process as claimed in any of claims 1 to 4, wherein M' in the formulae II a to II c is B or Al.

6. A process as claimed in any of claims 1 to 5, wherein L is a tertiary amine.

7. A process as claimed in any of claims 1 to 6, wherein L is selected from among tri-*n*-butylamine, *N*,*N*-dimethylaniline and *N,N*-dimethylbenzylamine.

8. A process as claimed in any of claims 1 to 7, wherein all radicals Ar are phenyl.

9. A process as claimed in any of claims 1 to 8, wherein the molecularly defined activator of the formulae II a to b which is used is one in which Q¹ to Q⁴ are identical and are selected from among pentafluorophenyl, 3,5-bis(trifluoromethyl)phenyl and ortho-perfluorobiphenyl.

10. A process as claimed in any of claims 1 to 9, wherein the alkylating agent used is an aluminum alkyl selected from among trimethylaluminum, triethylaluminum, tri-*n*-propylaluminum, triisopropylaluminum, tri-*n*-butylaluminum, triisobutylaluminum and tri-*n*-hexylaluminum.

11. A catalyst system obtainable by a process as claimed in any of claims 1 to 10.

12. A process for the polymerization or copolymerization of olefins using a catalyst system as claimed in claim 11.

13. A process as claimed in claim 12, wherein the polymerization is carried out in the presence of hydrogen as molar mass regulator.

## Revendications

1. Procédé pour la préparation d'un système catalyseur pour la polymérisation des oléfines, **caractérisé en ce que** l'on part d'un ou plusieurs composés de formule générale Ia ou Ib, 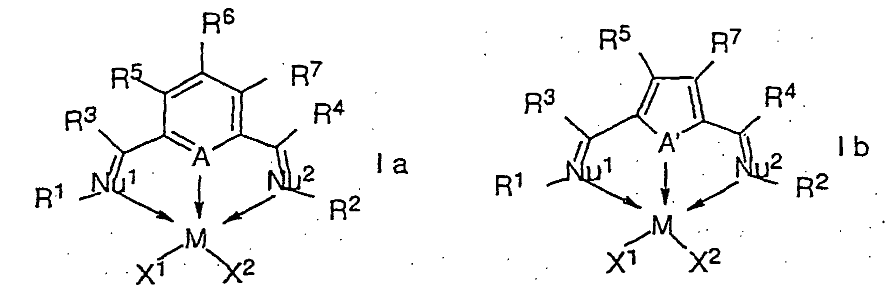 dans lesquelles les symboles ont les significations suivantes :
M représente un métal de transition des groupes 5 à 10 de la Classification périodique des éléments,
A est choisi parmi N, P ou As,
A' est choisi parmi O ou S,
Nu¹, Nu² représentent N ou P,
X¹, X² représentent des halogènes ou des groupes alcoxy en C₁-C₄,
R¹, R² représentent chacun un groupe alkyle en C₁-C₁₂, cycloalkyle en C₃-C₁₂, aralkyle en C₇-C₁₅, aryle en C₆-C₁₄ substitué ou non ou un groupe hétéroarylique azoté à cinq ou six chaînons,
R³, R⁴ représentent chacun l'hydrogène, un groupe alkyle en C₁-C₁₂, cycloalkyle en C₃-C₁₂, aralkyle en C₇-C₁₅, aryle en C₆-C₁₄ substitué ou non ou un groupe hétéroaryle azoté à cinq ou six chaînons,
R⁵ à R⁷ représentent chacun, indépendamment les uns des autres, l'hydrogène, un groupe alkyle en C₁-C₁₂, cycloalkyle en C₃-C₁₂, aralkyle en C₇-C₁₅, aryle en C₆-C₁₄ substitué ou non ou un groupe hétéroarylique azoté à cinq ou six chaînons, un halogène, un groupe alcoxy en C₁-C₆, NO₂, SiR⁸R⁹R¹⁰ ou OSiR⁸R⁹R¹⁰, des groupes voisins pouvant être reliés ensemble et avec le squelette fondamental en formant un cycle de cinq à dix chaînons,
R⁸ à R¹⁰ représentent chacun, indépendamment les uns des autres, l'hydrogène ou un groupe alkyle en C₁-C₁₂, cycloalkyle en C₃-C₁₂, aralkyle en C₇-C₁₅, aryle en C₆-C₁₄ substitué ou non ; on ajoute un activateur à l'état de molécule définie de formule générale IIa ou IIb
[(L-H)]⁺[(M')Q¹Q²Q³Q⁴]⁻ IIa
[(Car₃)]⁺[(M')Q¹Q²Q³Q⁴]⁻ IIb
dans lesquelles les symboles ont les significations suivantes :
[L-H]⁺ représente un acide de Bronsted, L étant une base de Lewis électriquement neutre,
M' représente un élément du groupe 13 de la Classification périodique des éléments
Q¹ à Q⁴ représentent chacun, indépendamment les uns des autres, un hydrure, un groupe alkyle en C₁-C₁₂, cycloalkyle en C₃-C₁₂, aralkyle en C₇-C₁₅, aryle en C₆-C₁₄, substitué ou non ou un halogénure, sous réserve qu'au maximum les deux symboles Q¹ et Q² représentent des halogénures ;
les symboles Ar, ayant des significations identiques ou différentes, représentent chacun un groupe aryle en C₆-C₁₄ substitué ou non,
et on ajoute finalement un agent alkylant choisi parmi LiR¹¹, MgR¹¹R¹² ou AlR¹²R¹³R¹⁴,
R¹¹ à R¹⁴ représentant chacun, indépendamment les uns des autres, un groupe alkyle en C₁-C₁₂, cycloalkyle en C₃-C₁₂, aralkyle en C₇-C₁₅ ou aryle en C₆-C₁₄ substitué ou non.

2. Procédé selon la revendication 1, **caractérisé par le fait que** dans les formules Ia et Ib, M représente Fe.

3. Procédé selon les revendications 1 et 2, **caractérisé par le fait que**, dans la formule générale Ia, A, Nu¹ et Nu² représentent N.

4. Procédé selon les revendications 1 et 2, **caractérisé par le fait que**, dans la formule générale Ib, Nu¹ et Nu² représentent chacun N et A' représente S.

5. Procédé selon les revendications 1 à 4, **caractérisé par le fait que**, dans les formules IIa et IIb, M' représente B ou AI.

6. Procédé selon les revendications 1 à 5, **caractérisé par le fait que** L représente une amine tertiaire.

7. Procédé selon les revendications 1 à 6, **caractérisé par le fait que** L est choisi parmi la tri-n-butylamine, la N,N-diméthylaniline ou la N,N-diméthylbenzylamine.

8. Procédé selon les revendications 1 à 7, **caractérisé par le fait que** tous les symboles Ar représentent des groupes phényle.

9. Procédé selon les revendications 1 à 8, **caractérisé par le fait que** l'on utilise un activateur à l'état de molécule définie de formule générale IIa ou IIb dans lesquelles Q¹ à Q⁴ sont identiques et choisis parmi les groupes pentafluorophényle, 3,5-bis-(trifluorométhyl)phényle et ortho-perfluoro-biphényle.

10. Procédé selon la revendication 1 à 9, **caractérisé par le fait que** l'agent alkylant est un alkylaluminium choisi parmi le triméthylaluminium, le triéthylaluminium, le tri-n-propylaluminium, le triisopropylaluminium, le tri-n-butylaluminium, le triisobutylaluminium et le tri-n-hexylaluminium.

11. Système catalyseur obtenu par le procédé selon les revendications 1 à 10.

12. Procédé pour la polymérisation ou la copolymérisation des oléfines à l'aide d'un système catalyseur selon la revendication 11.

13. Procédé selon la revendication 12, **caractérisé par le fait que** l'on polymérise en présence d'hydrogène servant de régulateur du poids moléculaire.
